# EUROPEAN PATENT APPLICATION

(11) **EP 4 722 567 A1**
(43) Date of publication of application: **08.04.2026**
(21) Application number: 24815577.2
(22) Date of filing: 30.05.2024
(51) Int. Cl.: F16J 15/10

(54) **BACKUP RING**

(30) Priority: 01.06.2023 JP 2023090958
(71) Applicant: VALQUA, Ltd., Shinagawa-ku Tokyo 141-6024 (JP)
(72) Inventor: MINAMI, Mitsuru, Gojo-shi, Nara 637-0014 (JP); UEDA, Akira, Gojo-shi, Nara 637-0014 (JP)
(74) Representative: Vossius & Partner Patentanwälte Rechtsanwälte mbB
(86) International application number: PCT/JP2024/019901
(87) International publication number: WO 2024/248097

(57) **Abstract**

In a backup ring (20), an outer diameter dimension (L21) between outer vertical surfaces (20b) in a radial direction is set to be larger than an inner diameter dimension of a cylindrical groove in a first tolerance setting, the outer diameter dimension (L21) between the outer vertical surfaces (20b) in the radial direction corresponding to an outer diameter of the backup ring (20), and an inner diameter dimension (L22) between inner vertical surfaces (20c) in the radial direction is set to be smaller than an outer diameter dimension of a bottom surface of a seal groove in a second tolerance setting, the inner diameter dimension (L22) between the inner vertical surfaces (20c) in the radial direction corresponding to an inner diameter of the backup ring (20). According to the backup ring (20) having this configuration, it is possible to provide a backup ring including a configuration that causes no gap between the backup ring and a seal groove.

## Description

### TECHNICAL FIELD

The present invention relates to a structure of a backup ring.

### BACKGROUND ART

Examples of a technique disclosing a seal structure for gas (such as high-pressure hydrogen) as an example of a sealed structure include those disclosed in WO 2004/061353 (PTL 1), Japanese Patent No. 4636281 (PTL 2), Japanese Patent No. 4949492 (PTL 3), Japanese Patent No. 5126462 (PTL 4) and the like.

### CITATION LIST

### PATENT LITERATURE

PTL 1: WO 2004/061353
PTL 2: Japanese Patent No. 4636281
PTL 3: Japanese Patent No. 4949492
PTL 4: Japanese Patent No. 5126462

### SUMMARY OF INVENTION

### TECHNICAL PROBLEM

In order to ensure attachment to a seal groove provided in a shaft of a backup ring, the dimensional tolerance of the backup ring is defined under JIS standards and the like. For example, according to the dimensional tolerance under JIS standards, the tolerance is set such that an outer diameter of the backup ring is smaller than an inner diameter of the shaft (example: 0/-0.15). On the other hand, the tolerance is set such that an inner diameter of the backup ring is larger than an outer diameter of the seal groove (example: +0.15/0).

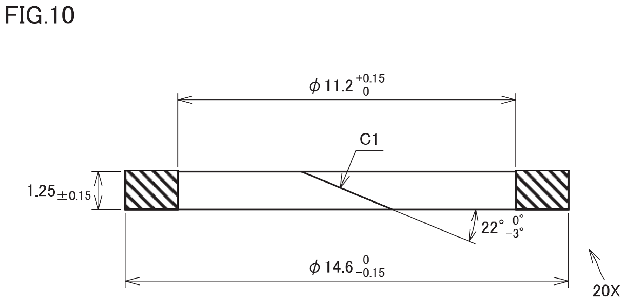

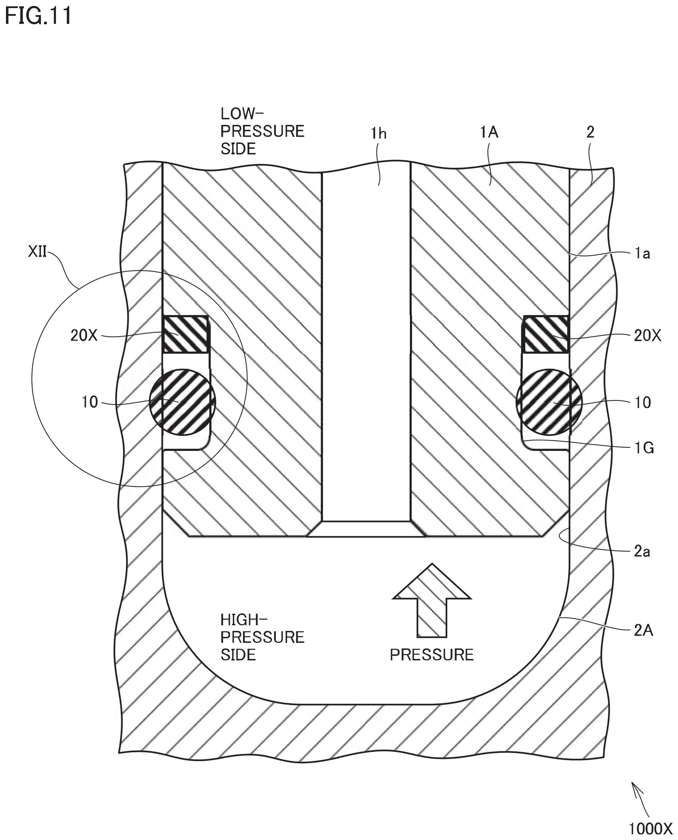

Fig. 10 shows an example of a backup ring 20X designed based on the above-described tolerance settings. Fig. 11 shows a sealed structure 1000X employing a seal structure when above-described backup ring 20X is used. An O-ring 10 and a backup ring 20 in an undeformed state are shown in a cross-sectional view of Fig. 11.

Sealed structure 1000X is a structure employing a seal structure for gas (such as high-pressure hydrogen), and has a housing 2. A cylindrical shaft 1A is accommodated in housing 2. A through hole 1h into which the gas is supplied is provided in a central portion of shaft 1A.

A bottomed cylindrical groove 2A in which shaft 1A is accommodated is provided in housing 2. An outer circumferential surface of shaft 1A constitutes a first seal surface 1a provided on the one member side. An inner circumferential surface of cylindrical groove 2A constitutes a second seal surface 2a provided on the other member side. The gas is supplied from through hole 1h of shaft 1A into cylindrical groove 2A, whereby the interior of cylindrical groove 2A enters a high-pressure state.

An annular seal groove 1G recessed inward from first seal surface 1a is provided in the outer circumferential surface of shaft 1A. O-ring 10 is disposed on the high-pressure side in seal groove 1G. Backup ring 20 is disposed on the low-pressure side in seal groove 1G. Backup ring 20 has an annular form and is provided with a cut face C1.

A cross-sectional shape of O-ring 10 is a generally circular shape. When an axial direction of shaft 1A is a longitudinal direction, a cross-sectional shape of seal groove 1G is a cross-sectional shape of a substantially rectangular groove as seen in a longitudinal section cut along a plane including an axis. A cross-sectional shape of backup ring 20X is a rectangular shape shown in Fig. 10.

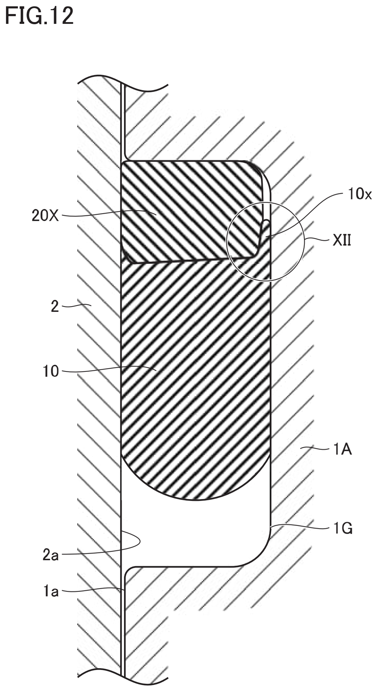

Fig. 12 shows a cross section in a state where a pressure is applied to O-ring 10 on the high-pressure side and O-ring 10 is deformed to the backup ring 20X side. As shown in Fig. 10, as for the dimensional tolerance of backup ring 20X, the tolerance is set such that an outer diameter thereof is smaller than an inner diameter of shaft 1A (example: 0/-0.15) and is set such that an inner diameter of backup ring 20X is larger than an outer diameter of seal groove 1G (example: +0.15/0). This results in a dimensional relationship that causes a gap between backup ring 20X and seal groove 1G. For example, in the case of a current standard product, when the inner diameter of shaft 1A is ϕ20, a gap having a radial dimension of approximately 0.2 mm to 0.3 mm is produced.

As shown in an area surrounded by XII in Fig. 12, when a pressure is applied to O-ring 10 on the high-pressure side, a protruding area 10x that protrudes from O-ring 10 into the gap between backup ring 20X and seal groove 1G is formed. Therefore, it is concerned that backup ring 20X and O-ring 10 may be broken, which may cause a decrease in reliability of backup ring 20X and also cause a decrease in reliability of the seal mechanism.

The present invention has been made to solve the above-described problem and an object thereof is to provide a backup ring including a configuration that causes no gap between the backup ring and a seal groove.

### SOLUTION TO PROBLEM

[1]: One aspect of a backup ring according to the present disclosure is directed to a backup ring accommodated in a seal groove provided in a shaft for partitioning into a high-pressure side and a low-pressure side, the shaft being accommodated in a cylindrical groove, the backup ring being used with a seal member disposed on the high-pressure side, the backup ring being disposed on the low-pressure side and having an annular form, wherein a cross-sectional shape of the backup ring as seen in a longitudinal section has: a first surface; an outer vertical surface vertically rising from a radially outer end of the first surface; an inner vertical surface vertically rising from a radially inner end of the first surface; an outer inclined surface gradually inclined radially inward from the outer vertical surface; an inner inclined surface gradually inclined radially outward from the inner vertical surface; and a second surface facing the first surface and coupling the outer inclined surface to the inner inclined surface.

An outer diameter dimension between the outer vertical surfaces in a radial direction is set to be larger than an inner diameter dimension of the cylindrical groove in a first tolerance setting, the outer diameter dimension between the outer vertical surfaces in the radial direction corresponding to an outer diameter of the backup ring, and an inner diameter dimension between the inner vertical surfaces in the radial direction is set to be smaller than an outer diameter dimension of a bottom surface of the seal groove in a second tolerance setting, the inner diameter dimension between the inner vertical surfaces in the radial direction corresponding to an inner diameter of the backup ring.

[2]: Another aspect of the backup ring according to the present disclosure is directed to a backup ring accommodated in a seal groove provided in a cylindrical groove for partitioning into a high-pressure side and a low-pressure side, the cylindrical groove accommodating a shaft, the backup ring being used with a seal member disposed on the high-pressure side, the backup ring being disposed on the low-pressure side and having an annular form, wherein a cross-sectional shape of the backup ring as seen in a longitudinal section has: a first surface; an outer vertical surface vertically rising from a radially outer end of the first surface; an inner vertical surface vertically rising from a radially inner end of the first surface; an outer inclined surface gradually inclined radially inward from the outer vertical surface; an inner inclined surface gradually inclined radially outward from the inner vertical surface; and a second surface facing the first surface and coupling the outer inclined surface to the inner inclined surface.

An outer diameter dimension between the outer vertical surfaces in a radial direction is set to be larger than an inner diameter dimension of a bottom surface of the seal groove in a first tolerance setting, the outer diameter dimension between the outer vertical surfaces in the radial direction corresponding to an outer diameter of the backup ring, and an inner diameter dimension between the inner vertical surfaces in the radial direction is set to be smaller than an outer diameter dimension of the shaft in a second tolerance setting, the inner diameter dimension between the inner vertical surfaces in the radial direction corresponding to an inner diameter of the backup ring.
[3]: The backup ring according to any of the above, wherein the first tolerance setting is a dimensional error ranging from 0 mm to +0.15 mm, and the second tolerance setting is a dimensional error ranging from -0.15 mm to 0 mm.
[4]: The backup ring according to any of the above, wherein an outer curved surface is provided in an area where the outer inclined surface and the second surface intersect with each other.
[5]: The backup ring according to any of the above, wherein an inner curved surface is provided in an area where the inner inclined surface and the second surface intersect with each other.

### ADVANTAGEOUS EFFECTS OF INVENTION

According to this backup ring, it is possible to provide a backup ring including a configuration that causes no gap between the backup ring and a seal groove.

### BRIEF DESCRIPTION OF DRAWINGS

Fig. 1 is a cross-sectional view showing a sealed structure according to an embodiment.
Fig. 2 is a partially enlarged cross-sectional view showing a seal structure according to the embodiment.
Fig. 3 is a partially enlarged cross-sectional view of an area surrounded by III in Fig. 2.
Fig. 4 is a plan view of a backup ring according to the embodiment.
Fig. 5 is a cross-sectional view taken along line V-V as seen in a direction of arrows in Fig. 4.
Fig. 6 is a cross-sectional view taken along line VI-VI as seen in a direction of arrows in Fig. 4.
Fig. 7 is a cross-sectional view showing the dimensional tolerance of the backup ring according to the embodiment.
Fig. 8 is an enlarged cross-sectional view showing a modification of the backup ring.
Fig. 9 is a partially enlarged cross-sectional view showing another seal structure.
Fig. 10 is a cross-sectional view of a backup ring according to the conventional technique.
Fig. 11 is a cross-sectional view showing a sealed structure according to the conventional technique.
Fig. 12 is a partially enlarged cross-sectional view of an area surrounded by XII in Fig. 11.

### DESCRIPTION OF EMBODIMENTS

A backup ring according to an embodiment of the present disclosure will be described below with reference to the drawings. When the number, an amount or the like is mentioned in an embodiment described below, the scope of the present invention is not necessarily limited to the number, the amount or the like unless otherwise specified. In addition, the same or corresponding components are denoted by the same reference numerals, and redundant description may not be repeated. In the following description, for convenience of explanation, a positional relationship is clearly indicated by using upper and lower words, but a configuration in which the upper and lower positions are upside down and a configuration in which the upper and lower positions are arranged on the left and right sides are not excluded.

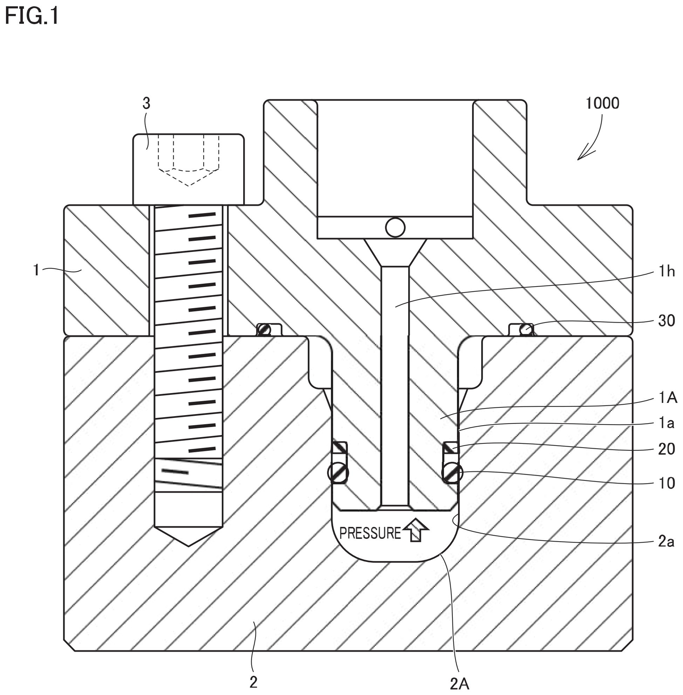

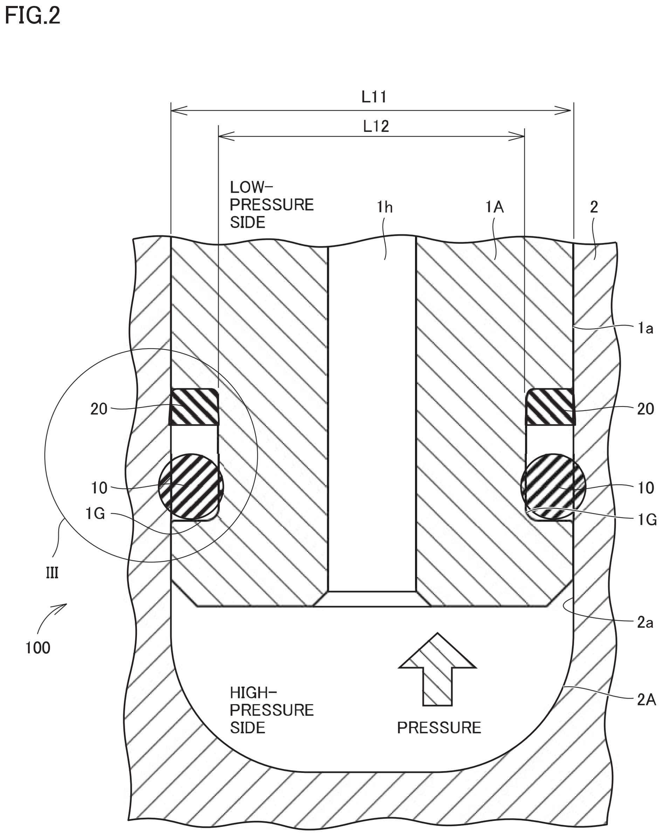

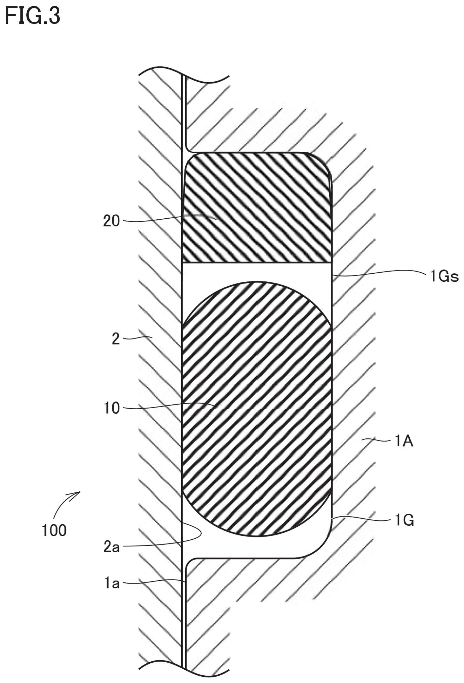

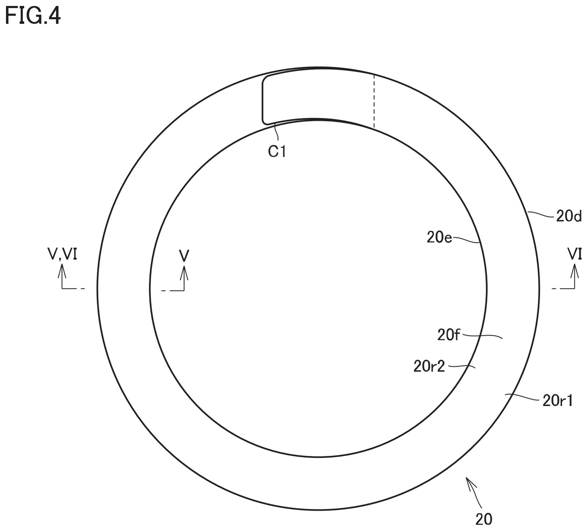

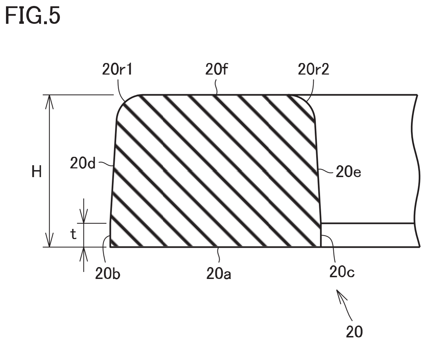

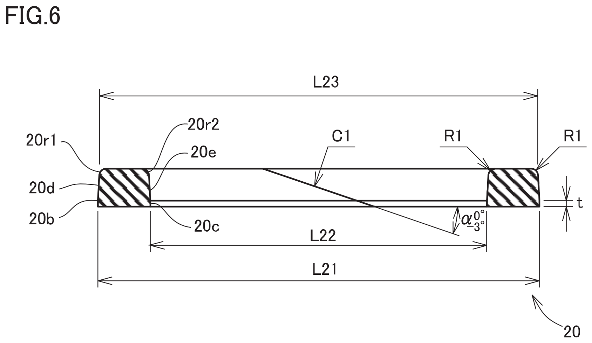

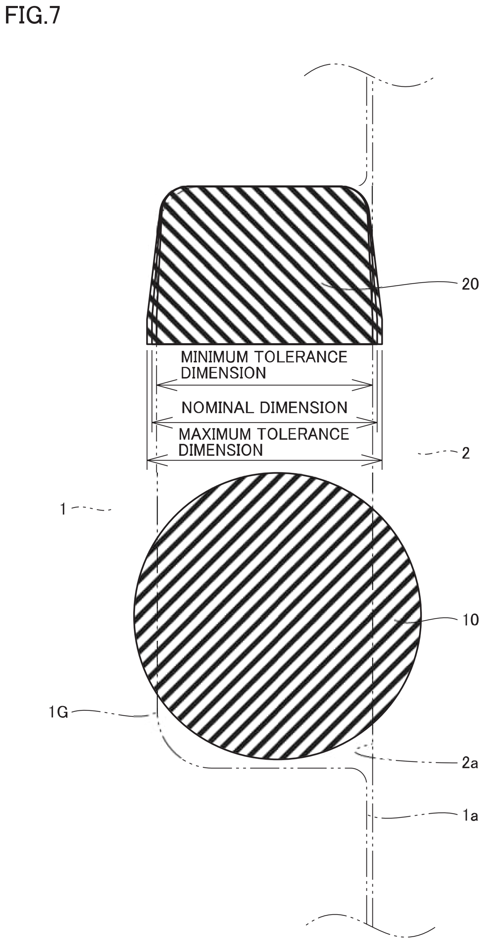

A seal structure and a backup ring 20 according to the present embodiment will be described with reference to Figs. 1 to 7. Fig. 1 is a cross-sectional view showing a sealed structure 1000. Fig. 2 is a partially enlarged cross-sectional view showing a seal structure 100. Fig. 3 is a partially enlarged cross-sectional view of an area surrounded by III in Fig. 2. Fig. 4 is a plan view of backup ring 20. Fig. 5 is a cross-sectional view taken along line V-V as seen in a direction of arrows in Fig. 4. Fig. 6 is a cross-sectional view taken along line VI-VI as seen in a direction of arrows in Fig. 4. Fig. 7 is a cross-sectional view showing the dimensional tolerance of backup ring 20.

### (Sealed Structure 1000)

Referring to Fig. 1, sealed structure 1000 according to the present embodiment is a structure employing a seal structure for gas (such as high-pressure hydrogen), and has a header 1 and housing 2. Header 1 is provided with cylindrical shaft 1A extending to the housing 2 side. Through hole 1h into which the gas is supplied is provided in a central portion of shaft 1A.

Bottomed cylindrical groove 2A in which shaft 1A is accommodated is provided in housing 2. An outer circumferential surface of shaft 1A constitutes first seal surface 1a provided on the one member side. An inner circumferential surface of cylindrical groove 2A constitutes second seal surface 2a provided on the other member side. The gas is supplied from through hole 1h of shaft 1A into cylindrical groove 2A, whereby the interior of cylindrical groove 2A enters a high-pressure state.

Header 1 and housing 2 are fastened by a bolt 3 with an O-ring 30 interposed therebetween. The airtightness of seal structure 100 described below is thus maintained.

### (Seal Structure 100)

Details of seal structure 100 will be described with reference to Figs. 2 and 3. Annular seal groove 1G recessed inward from first seal surface 1a is provided in the outer circumferential surface of shaft 1A. On the high-pressure side in seal groove 1G, a seal ring is disposed as a seal member, and in the present embodiment, O-ring 10 is disposed. On the low-pressure side in seal groove 1G, backup ring 20 is disposed as a backup member. O-ring 10 and backup ring 20 in an undeformed state are shown in the cross-sectional view of Fig. 2, and O-ring 10 and backup ring 20 in a deformed state are shown in the cross-sectional view of Fig. 3.

A cross-sectional shape of O-ring 10 is a generally circular shape, and a commercially available O-ring can be used. Instead of the commercially available O-ring, a seal member for fixation, such as a U-cup seal, may be used as the seal ring.

A material harder than a material of O-ring 10 and softer than a material of shaft 1A, such as PTFE (polytetrafluoroethylene), POM (polyoxymethylene), or PEEK (polyetheretherketone), may be used as a material of backup ring 20. Details of a cross-sectional shape of backup ring 20 and the function of seal structure 100 will be described below.

### (Shape of Backup Ring 20)

The overall shape and the cross-sectional shape of backup ring 20 will be described with reference to Figs. 4 to 7. Backup ring 20 has an annular shape. Backup ring 20 is provided with cut face C1 for attachment to seal groove 1G of cylindrical shaft 1A.

As shown in Fig. 5, a longitudinal sectional shape of backup ring 20 is a substantially rectangular shape, and has a first surface 20a located on the high-pressure side (a side where backup ring 20 faces O-ring 10), an outer vertical surface 20b vertically rising from a radially outer end of first surface 20a, an inner vertical surface 20c vertically rising from a radially inner end of first surface 20a, an outer inclined surface 20d gradually inclined radially inward from outer vertical surface 20b, an inner inclined surface 20e gradually inclined radially outward from inner vertical surface 20c, and a second surface 20f facing first surface 20a and coupling outer inclined surface 20d to inner inclined surface 20e. Second surface 20f is located on the low-pressure side (a side where backup ring 20 does not face O-ring 10).

Furthermore, an outer curved surface 20r1 is provided in an area where outer inclined surface 20d and second surface 20f intersect with each other. Similarly, an inner curved surface 20r2 is provided in an area where inner inclined surface 20e and second surface 20f intersect with each other.

When backup ring 20 is attached to seal groove 1G, outer vertical surface 20b comes into contact with second seal surface 2a of cylindrical groove 2A, thereby constituting a seal surface. Inner vertical surface 20c comes into contact with a bottom surface 1Gs of seal groove 1G. Since outer inclined surface 20d and inner inclined surface 20e are gradually inclined, the attachability when backup ring 20 is attached to seal groove 1G is facilitated. Outer curved surface 20r1 and inner curved surface 20r2 serve as a marker indicating the direction of backup ring 20, and the side where outer curved surface 20r1 and inner curved surface 20r2 are located corresponds to the low-pressure side (the side where backup ring 20 does not face O-ring 10).

Referring to Fig. 6, as for the design dimensional tolerance of backup ring 20, an outer diameter dimension L21 between outer vertical surfaces 20b in the radial direction is set to be larger than an inner diameter dimension L11 of cylindrical groove 2A (see Fig. 2) in a first tolerance setting, outer diameter dimension L21 between outer vertical surfaces 20b in the radial direction corresponding to an outer diameter of backup ring 20. For example, the first tolerance setting is a dimensional design ranging from 0 mm to +0.15 mm.

Furthermore, an inner diameter dimension L22 between inner vertical surfaces 20c in the radial direction is set to be larger than an outer diameter dimension L12 of bottom surface 1Gs of seal groove 1G (see Fig. 2) in a second tolerance setting, inner diameter dimension L22 between inner vertical surfaces 20c in the radial direction corresponding to an inner diameter of backup ring 20. For example, the second tolerance setting is a dimensional design ranging from -0.15 mm to 0 mm.

In other words, as shown in Fig. 7, in dimensional design of backup ring 20, the tolerance is set such that a minimum (MIN) dimension is first set to be clearance "zero", and then, a nominal dimension and a maximum (MAX) dimension are set (example: the outer diameter tolerance (0 mm to +0.15 m), the inner diameter tolerance (-0.15 mm to 0 mm), the width tolerance (0 mm to +0.10 m)).

Although design outer diameter dimension L21 and design inner diameter dimension L22 of backup ring 20 are variously selected, outer diameter dimension L21 is, for example, 14.6 mm in terms of minimum (MIN) dimension and inner diameter dimension L22 is, for example, 11.2 mm in terms of minimum (MIN) dimension. A dimension t of each of outer vertical surface 20b and inner vertical surface 20c is approximately 0.2 mm. A radius of each of outer curved surface 20r1 and inner curved surface 20r2 is approximately 0.2 mm. An inclination angle α of cut face C1 is approximately 22°.

As described above, by starting from the clearance "zero" design, no gap is produced between backup ring 20 and seal groove 1G. Therefore, even when a pressure is applied to O-ring 10 on the high-pressure side and O-ring 10 is deformed to the backup ring 20 side, the formation of a protruding area as in the conventional technique can be suppressed. Thus, breakage of backup ring 20 and O-ring 10 can be prevented.

### (Modification of Backup Ring)

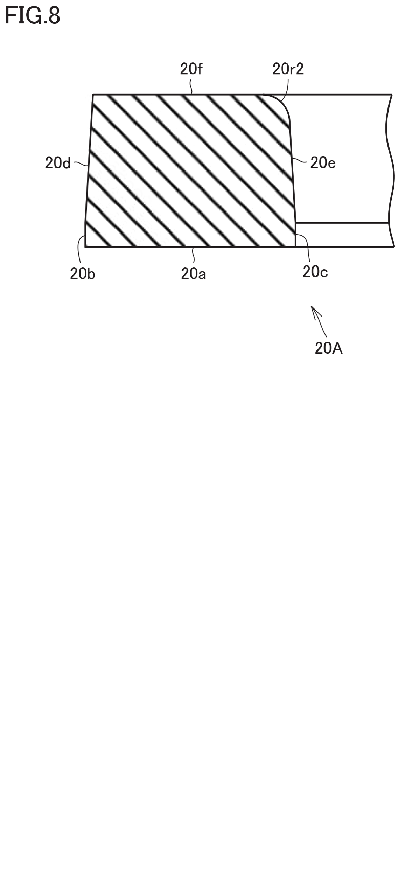

As a modification of the backup ring, a cross-sectional shape of a backup ring 20A will be described with reference to Fig. 8. Fig. 8 is an enlarged cross-sectional view showing the modification of the backup ring, which corresponds to the cross-sectional view taken along line V-V as seen in a direction of arrows in Fig. 4.

In above-described backup ring 20, outer curved surface 20r1 and inner curved surface 20r2 are provided as a marker indicating the direction of backup ring 20. Therefore, outer curved surface 20r1 and inner curved surface 20r2 do not necessarily need to be provided on both of the outer side and the inner side, and only inner curved surface 20r2 may be provided as shown in backup ring 20A. Although not shown, only outer curved surface 20r1 may be provided. When the marker indicating the direction is unnecessary, outer curved surface 20r1 and inner curved surface 20r2 do not need to be provided.

### (Another Seal Structure 100A)

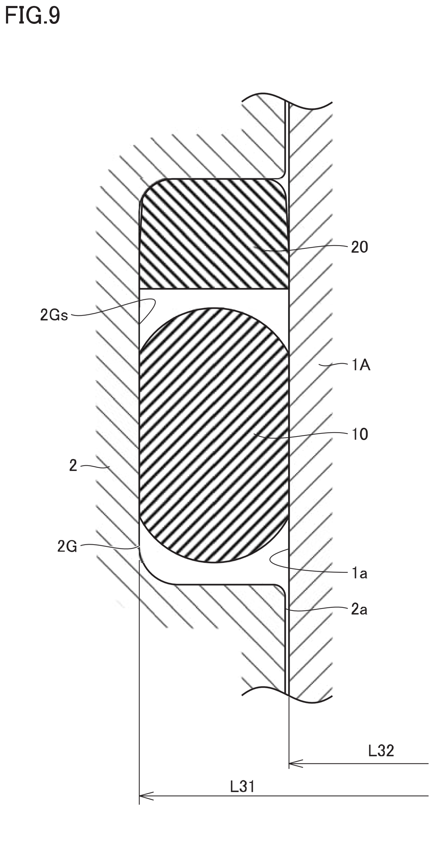

Another seal structure 100A will be described with reference to Fig. 9. Fig. 9 is a partially enlarged cross-sectional view showing another seal structure 100A.

In above-described seal structure 100, annular seal groove 1G is provided in shaft 1A. However, in seal structure 100A shown in Fig. 9, an annular seal groove 2G is provided on the housing 2 side. In this seal structure 100A as well, as for the design dimensional tolerance of backup ring 20, outer diameter dimension L21 between outer vertical surfaces 20b in the radial direction may be set to be larger than an inner diameter dimension L31 of a bottom surface 2Gs of seal groove 2G in a first tolerance setting, outer diameter dimension L21 between outer vertical surfaces 20b in the radial direction corresponding to an outer diameter of backup ring 20. The first tolerance setting is the same as that of seal structure 100.

Furthermore, inner diameter dimension L22 between inner vertical surfaces 20c in the radial direction may be set to be smaller than an outer diameter dimension L32 of shaft 1A in a second tolerance setting, inner diameter dimension L22 between inner vertical surfaces 20c in the radial direction corresponding to an inner diameter of backup ring 20. The second tolerance setting is the same as that of seal structure 100.

This seal structure 100A can also provide the same function and effect as those of seal structure 100.

It should be understood that the embodiment disclosed herein is illustrative and non-restrictive in every respect. The scope of the present invention is defined by the terms of the claims, rather than the description above, and is intended to include any modifications within the scope and meaning equivalent to the terms of the claims.

### REFERENCE SIGNS LIST

1 header; 1A shaft; 1G, 2G seal groove; 1Gs, 2Gs bottom surface; 1a first seal surface; 1h through hole; 2 housing; 2A cylindrical groove; 2a second seal surface; 3 bolt; 10, 30 O-ring; 10x protruding area; 20, 20X backup ring; 20a first surface; 20b outer vertical surface; 20c inner vertical surface; 20d outer inclined surface; 20e inner inclined surface; 20f second surface; 20r2 inner curved surface; 20r1 outer curved surface; 100, 100A seal structure; 1000, 1000X sealed structure.

## Claims

1. A backup ring accommodated in a seal groove provided in a shaft for partitioning into a high-pressure side and a low-pressure side, the shaft being accommodated in a cylindrical groove, the backup ring being used with a seal member disposed on the high-pressure side, the backup ring being disposed on the low-pressure side and having an annular form, wherein
a cross-sectional shape of the backup ring as seen in a longitudinal section has:
a first surface;
an outer vertical surface vertically rising from a radially outer end of the first surface;
an inner vertical surface vertically rising from a radially inner end of the first surface;
an outer inclined surface gradually inclined radially inward from the outer vertical surface;
an inner inclined surface gradually inclined radially outward from the inner vertical surface; and
a second surface facing the first surface and coupling the outer inclined surface to the inner inclined surface,
an outer diameter dimension between the outer vertical surfaces in a radial direction is set to be larger than an inner diameter dimension of the cylindrical groove in a first tolerance setting, the outer diameter dimension between the outer vertical surfaces in the radial direction corresponding to an outer diameter of the backup ring, and
an inner diameter dimension between the inner vertical surfaces in the radial direction is set to be smaller than an outer diameter dimension of a bottom surface of the seal groove in a second tolerance setting, the inner diameter dimension between the inner vertical surfaces in the radial direction corresponding to an inner diameter of the backup ring.

2. A backup ring accommodated in a seal groove provided in a cylindrical groove for partitioning into a high-pressure side and a low-pressure side, the cylindrical groove accommodating a shaft, the backup ring being used with a seal member disposed on the high-pressure side, the backup ring being disposed on the low-pressure side and having an annular form, wherein
a cross-sectional shape of the backup ring as seen in a longitudinal section has:
a first surface;
an outer vertical surface vertically rising from a radially outer end of the first surface;
an inner vertical surface vertically rising from a radially inner end of the first surface;
an outer inclined surface gradually inclined radially inward from the outer vertical surface;
an inner inclined surface gradually inclined radially outward from the inner vertical surface; and
a second surface facing the first surface and coupling the outer inclined surface to the inner inclined surface,
an outer diameter dimension between the outer vertical surfaces in a radial direction is set to be larger than an inner diameter dimension of a bottom surface of the seal groove in a first tolerance setting, the outer diameter dimension between the outer vertical surfaces in the radial direction corresponding to an outer diameter of the backup ring, and
an inner diameter dimension between the inner vertical surfaces in the radial direction is set to be smaller than an outer diameter dimension of the shaft in a second tolerance setting, the inner diameter dimension between the inner vertical surfaces in the radial direction corresponding to an inner diameter of the backup ring.

3. The backup ring according to claim 1 or 2, wherein
the first tolerance setting is a dimensional error ranging from 0 mm to +0.15 mm, and
the second tolerance setting is a dimensional error ranging from -0.15 mm to 0 mm.

4. The backup ring according to claim 1 or 2, wherein
an outer curved surface is provided in an area where the outer inclined surface and the second surface intersect with each other.

5. The backup ring according to claim 1 or 2, wherein
an inner curved surface is provided in an area where the inner inclined surface and the second surface intersect with each other.
